# EUROPÄISCHE PATENTANMELDUNG

(11) **EP 2 562 844 A1**
(43) Veröffentlichungstag der Anmeldung: **27.02.2013**
(21) Anmeldenummer: 12180076.7
(22) Anmeldetag: 10.08.2012
(51) Int. Cl.: H01M 2/10, A63H 30/00, G06K 19/00

(54) **Steuergerät**

(30) Priorität: 22.08.2011 DE 102011081324
(71) Anmelder: Brendel, Wolfgang, 74564 Crailsheim (DE)
(72) Erfinder: Brendel, Wolfgang, 74564 Crailsheim (DE)
(74) Vertreter: Tiesmeyer, Johannes

(57) **Zusammenfassung**

Steuergerät (60), insbesondere Funkfernsteuerungsgerät, mit einem Gehäuse (66), einer Signalgebereinrichtung zur Bereitstellung von Steuersignalen für ein zu steuerndes Gerät und mit einer Batteriehalterung (62) zur Aufnahme einer wiederaufladbaren Batterie (20) zur elektrischen Versorgung des Steuergerätes (60),
dadurch gekennzeichnet, dass die Batteriehalterung (62) so beschaffen ist, dass sie die wiederaufladbare Batterie (20) in verschiedenen definierten Haltepositionen aufnehmen kann, zwischen denen die wiederaufladbare Batterie (20) unter Verbleib in der Batteriehalterung (62) verlagerbar ist, wobei eine der Haltepositionen eine Einschaltposition zur elektrischen Versorgung des Steuergerätes (60) mittels der Batterie (20) ist und eine weitere der Haltepositionen eine Ausschaltposition ist, wobei die Signalgebereinrichtung durch Verlagerung der Batterie (20) in die Ausschaltposition deaktivierbar ist.

## Beschreibung

Die vorliegende Erfindung betrifft ein Steuergerät mit einem Gehäuse, einer Signalgebereinrichtung zur Bereitstellung von Steuersignalen für ein zu steuerndes Gerät und mit einer Batteriehalterung zur Aufnahme einer wiederaufladbaren Batterie zur elektrischen Versorgung des Steuergerätes. Derartige Steuergeräte sind aus verschiedenen Bereichen der Technik bekannt.

Die Erfindung betrifft sowohl Steuergeräte, welche durch eine Steuersignale an das zu steuernde Gerät übertragende Leitung mit dem zu steuernden Gerät verbunden sind, als auch im Folgenden als Funkfernsteuerungsgeräte bezeichnete Steuergeräte, bei welchen die Steuersignale von dem Steuergerät mittels eines Senders elektromagnetisch per Funk an das zu steuernde Gerät übertragen werden.

Steuergeräte der eingangs genannten Art finden beispielsweise Anwendung bei der Steuerung, insbesondere der Funkfernsteuerung, von Transportgeräten, Verlademaschinen, Hubeinrichtungen, wie etwa Kranen, u. dgl.

Aus dem Stand der Technik bekannte Steuergeräte der eingangs genannten Art umfassen in der Regel eine wiederaufladbare Batterie zur Spannungsversorgung des Steuergeräts, einen Stopp-Schalter zur Abschaltung der Signalgebereinrichtung oder/und des zu steuernden Geräts, insbesondere in einem ein schnelles Abschalten erfordernden Notfall (Not-Aus), sowie eine Schlüsselvorrichtung, welche dazu vorgesehen ist, eine Inbetriebnahme oder/und Bedienung des Steuergeräts durch eine nicht-autorisierte Person zu verhindern.

Die durch die Batterie, den Stopp-Schalter und die Schlüsselvorrichtung ausgeübten Funktionen sind in den aus dem Stand der Technik bekannten Vorrichtungen unterschiedlichen Komponenten oder Baugruppen des Steuergeräts zugeordnet. Dies bedingt eine zeit- und kostenaufwändige Herstellung, einen komplizierten Aufbau und eine vergleichsweise umständliche Bedienung der bekannten Steuergeräte. Die Bereitstellung von Schlüsselvorrichtung und Batterie als voneinander und von dem übrigen Steuergerät gesondert ausgebildete Bauteile erhöht ferner die Gefahr eines Verlusts dieser Komponenten durch das Bedienungspersonal der Steuergeräte. Darüber hinaus kann die gesonderte Ausbildung von Batterie, Schlüsselvorrichtung und Stopp-Schalter in einem Notfall dazu führen, dass eine das Steuergerät bedienende Person beispielsweise die Schlüsselvorrichtung und den Stopp-Schalter miteinander verwechselt und den Stopp-Schalter daher erst nach einer unnötigen zeitlichen Verzögerung betätigt.

Es ist daher Aufgabe der vorliegenden Erfindung, ein Steuergerät der eingangs genannten Art bereitzustellen, welches einen einfacheren Aufbau aufweist und gleichzeitig eine verbesserte Bedienungsfreundlichkeit und höhere Betriebssicherheit ermöglicht.

Diese Aufgabe wird erfindungsgemäß durch ein Steuergerät der eingangs genannten Art gelöst, in welchem die Batteriehalterung so beschaffen ist, dass sie die wiederaufladbare Batterie in verschiedenen definierten Haltepositionen aufnehmen kann, zwischen denen die wiederaufladbare Batterie unter Verbleib in der Batteriehalterung verlagerbar ist, wobei eine der Haltepositionen eine Einschaltposition zur elektrischen Versorgung des Steuergerätes mittels der Batterie ist und eine weitere der Haltepositionen eine Ausschaltposition ist, wobei die Signalgebereinrichtung durch Verlagerung der Batterie in die Ausschaltposition deaktivierbar ist.

Das erfindungsgemäße Steuergerät umfasst ein Gehäuse, eine Signalgebereinrichtung und eine Batteriehalterung zur Aufnahme einer wiederaufladbaren Batterie zur elektrischen Versorgung des Steuergeräts. Da die Batteriehalterung die wiederaufladbare Batterie derart aufnehmen kann, dass sie von der Einschaltposition in die Ausschaltposition verlagerbar ist, kommt der Batterie sowohl die Funktion der Spannungsversorgung für das Steuergerät als auch die Rolle des Stopp-Schalters zu, wodurch der Aufbau des Steuergeräts vereinfacht und die Bedienungsfreundlichkeit und Betriebssicherheit des Steuergeräts erhöht werden.

Erfindungsgemäß wird die Signalgebereinrichtung durch Verlagerung der Batterie in die Ausschaltposition deaktiviert. Eine Deaktivierung der Signalgebereinrichtung erfolgt durch ein wenigstens teilweises Abschalten der Signalgeberelektronik und bewirkt, dass die Signalgebereinrichtung keine Signale mehr emittiert. Das zu steuernde Gerät ist daher so programmiert, dass es ein derartiges Ausbleiben von Steuersignalen erkennt und daraufhin einen vordefinierten Sicherungszustand annimmt. Auf diese Weise kann das zu steuernde Gerät in einen Stopp-Zustand (Not-aus) gebracht werden, ohne dass dafür die Übertragung eines entsprechenden Steuersignals an das zu steuernde Gerät nötig wäre.

Im Rahmen der vorliegenden Anmeldung werden unter wiederaufladbaren Batterien insbesondere Akkumulatoren verstanden. Vorzugsweise umfasst das Steuergerät auch eine zur Aufnahme in der Batteriehalterung angepasste wiederaufladbare Batterie.

Vorzugsweise sind das Steuergerät und die Batterie elektrisch voneinander getrennt, wenn die Batterie in der Ausschaltposition ist. Gemäß einer derartigen Ausführungsform werden bei einer Verlagerung der Batterie von der Einschaltposition in die Ausschaltposition Batterie und Steuergerät elektrisch voneinander getrennt, so dass die Signalgebereinrichtung durch eine Unterbrechung der Stromzufuhr deaktiviert wird. Dies erlaubt eine besonders einfache und fehlersichere Realisierung der Stopp-Schalter-Funktion, da allein durch eine Verlagerung der Batterie relativ zur Batteriehalterung eine Unterbrechung der Spannungsversorgung und damit auch der Steuersignalübertragung erreicht wird.

In Weiterbildung der Erfindung kann die Batterie in einer der Haltepositionen, welche im Folgenden als Ladeposition bezeichnet wird, aufladbar sein. Die Ladeposition kann eine von der Einschaltposition und der Ausschaltposition verschiedene Halteposition sein. Sie kann aber auch eine oder beide aus Einschaltposition und Ausschaltposition sein. Ebenso ist denkbar, dass jede der Haltepositionen eine Ladeposition ist. Um die Batterie aufladen zu können, ist das Steuergerät gemäß dieser Ausführungsform an eine externe Spannungsquelle anschließbar. Beispielsweise kann das Steuergerät mittels eines Netzsteckers an das öffentliche Stromnetz anschließbar sein.

Vorzugsweise ist die Batteriehalterung so beschaffen, dass eine darin aufgenommene Batterie durch Druckbeaufschlagung in die Ausschaltposition verlagerbar ist. Dies erlaubt eine besonders schnelle Reaktion einer das Steuergerät bedienenden Person auf eine einen Stopp des zu steuernden Geräts erfordernde Situation. So kann, sobald sich etwa zeigt, dass ein mittels des Steuergeräts gesteuerter Lastkran eine ungewünschte Bewegung ausführt, ein Halt des Lastkrans durch beispielsweise manuelle Druckbeaufschlagung der Batterie erreicht werden, um sie von der Einschaltposition in die Ausschaltposition zu verlagern. Gemäß einer besonders bevorzugten Ausführungsform ist dabei vorgesehen, dass die Batterie unmittelbar druckbeaufschlagbar ist, d.h. unversperrten Zugriff erlaubt. Alternativ kann jedoch auch vorgesehen sein, dass die Batterie mit einem Druckvermittlungselement, etwa einem Schaltknopf, Hebel oder dgl. in Druckübertragungsverbindung steht, welches druckbeaufschlagt werden kann und in einem solchen Fall die Druckkraft auf die Batterie überträgt.

Gemäß einer bevorzugten Ausführungsform weist die Batteriehalterung ein Batteriefach auf, das so beschaffen ist, dass eine darin in der Einschaltposition aufgenommene Batterie teilweise aus dem Gehäuse herausragt und die Batterie durch weiteres Einschieben in das Batteriefach aus der Einschaltposition in die Ausschaltposition verlagerbar ist. Ein wenigstens teilweises Herausragen der Batterie aus dem Gehäuse erleichtert die Druckbeaufschlagbarkeit der Batterie bzw. des Druckvermittlungselements. Es verbessert die schnelle manuelle Erreichbarkeit der Batterie bzw. des Druckvermittlungselements für die Hand des Benutzers, wenn die Batterie relativ zu einer benachbarten Oberfläche des Gehäuses hervorsteht. Der Benutzer kann das Steuergerät mit einer Hand halten und aus diesem Halt heraus mit derselben Hand das Steuergerät so beeinflussen, dass die Batterie von der Einschaltposition in die Ausschaltposition gelangt. Dabei kann das Steuergerät z.B. mit dem herausragenden Teil der Batterie gegen eine Fläche einer Wand oder dgl. gedrückt werden, um die Batterie schnell in die Ausschaltposition zu schieben.

Die Batteriehalterung kann erste Rastmittel zur lösbaren Festlegung der Batterie in der jeweiligen Halteposition aufweisen, um in einfacher Weise ein lösbares Anbringen der Batterie an der Batteriehalterung in der gewünschten Halteposition zu ermöglichen. Vorzugsweise weist dazu die Batterie zu den ersten Rastmitteln des Steuergerätes komplementäre zweite Rastmittel auf. Die ersten Rastmittel sind vorzugsweise durch wenigstens eine federvorgespannte Rastkugel gebildet und die zweiten Rastmittel umfassen vorzugsweise wenigstens eine an der Batterie gebildete Ausnehmung, wobei die wenigstens eine federvorgespannte Rastkugel dazu ausgebildet ist, mit der wenigstens einen Ausnehmung in Eingriff zu treten, sobald sich die Batterie relativ zu der Batteriehalterung in einer vorbestimmten Position befindet. Selbstverständlich kann die Rastkugel mit Spannfeder alternativ an der Batterie vorgesehen sein, wohingegen die Batteriehalterung die komplementären Ausnehmungen aufweisen kann.

In Weiterbildung der Erfindung weist das Steuergerät vorzugsweise wenigstens ein erstes Paar elektrischer Kontakte auf, welches an den ersten Rastmitteln der Batteriehalterung bereitgestellt ist und dazu ausgebildet ist, in wenigstens einer der Haltepositionen an einem weiteren, an der Batterie vorgesehenen Paar elektrischer Kontakte anzuliegen. Das weitere Paar elektrischer Kontakte ist vorzugsweise an den an der Batterie ausgebildeten zweiten Rastmitteln vorgesehen. Eine solche Zusammenfassung von Rastmitteln und elektrischen Kontakten ermöglicht es je nach Ausgestaltung der ersten und zweiten Rastmittel beispielsweise, dass auch dann, wenn die Batterie mit Spiel in der Batteriehalterung aufgenommen ist, die Rastmittel und die Batterie zuverlässig elektrisch miteinander verbindbar sind. Alternativ können jedoch sowohl an dem Steuergerät als auch an der Batterie die jeweiligen Rastmittel und Paare elektrischer Kontakte auch entfernt voneinander angeordnet sein.

Gemäß einer weiteren Ausführungsform der vorliegenden Erfindung umfasst die Batterie eine Schlüsselvorrichtung bzw. Schlüsselfunktion und das Steuergerät eine Schlossvorrichtung bzw. Schlossfunktion, welche in derselben Weise kodiert ist wie die Schlüsselvorrichtung. Unter einer Kodierungsweise wird hier die physikalische Natur des zugrundeliegenden Schlüsselmechanismus verstanden. Die Batterie ist ferner vorzugsweise nur dann betriebsbereit in der Einschaltposition in der Batteriehalterung aufnehmbar, wenn die Kodierung der Schlüsselvorrichtung mit der Kodierung der Schlossvorrichtung korrespondiert. Unter der Kodierung der Schlüsselvorrichtung wird die schlüsselspezifische Kennung der Schlüsselvorrichtung verstanden. Im Falle einer mechanischen Kodierung kann die Kennung insbesondere durch eine spezifische Formgebung von Schlüsselvorrichtung bzw. Schlossvorrichtung gegeben sein. Im Falle einer elektromagnetischen Kodierung kann die Kennung beispielsweise durch einen Barcode gegeben oder als Information auf einem RFID-Chip gespeichert sein. So umfasst gemäß einer besonders bevorzugten Ausführungsform der Erfindung die Schlüsselvorrichtung einen mit einer elektromagnetisch auslesbaren Kennung bereitgestellten Transponder, vorzugsweise einen RFID-Chip, wobei die Schlossvorrichtung eine Vorrichtung zum elektromagnetischen Auslesen der Kennung umfasst.

Wenn die Batterie nur dann in wenigstens einer der Haltepositionen aufnehmbar ist, wenn die Kodierungen von Schlüsselvorrichtung und von Schlossvorrichtung korrespondieren, kann einerseits ausgeschlossen werden, dass ungeeignete oder unerwünschte Kombinationen von Steuergerät und wiederaufladbarer Batterie zum Einsatz kommen. Ferner kann ein Betrieb des Steuergeräts durch dazu nicht autorisierte Personen verhindert werden. Darüber hinaus kann durch spezielle Wahl bzw. gegebenenfalls Programmierung der Batterie detailliert bestimmt werden, welche Person an welchem Steuergerät über welche Benutzungsrechte verfügen soll. Dies ist insbesondere dann vorteilhaft, wenn eine Mehrzahl von Personen ein oder mehrere Steuergeräte bedient. Es ist ferner denkbar, die Kodierungen von Schlüssel- und Schlossvorrichtung in Übereinstimmung mit einer hierarchischen Benutzerrechte-Struktur zu gestalten. So kann für eine bestimmte Mehrzahl von Steuergeräten beispielsweise nach Art eines Generalschlüssels in Gestalt der Batterie eine Schlüsselvorrichtung bereitgestellt sein, deren Kodierung mit allen Kodierungen der bestimmten Mehrzahl von Steuergeräten korrespondiert. Diese Schlüsselvorrichtung kann ein beispielsweise mit einem geeignet kodierten RFID-Chip ausgestatteter Master-Akkumulator sein.

Das Steuergerät ist, insbesondere aufgrund geeignet gewählter Abmaße und eines entsprechenden Gewichts des Steuergeräts vom Benutzer tragbar. Die Signalgebereinrichtung umfasst vorzugsweise einen ebenfalls durch die Batterie speisbaren Funksender, so dass das Steuergerät mobil einsetzbar und leicht transportierbar ist.

Die vorliegende Erfindung betrifft in einem weiteren Aspekt eine wiederaufladbare Batterie für ein Steuergerät, die dazu angepasst ist, das Steuergerät elektrisch zu versorgen und die zu Rastmitteln des Steuergeräts komplementäre Rastmittel aufweist, wobei die Batterie dazu angepasst ist, in verschiedenen definierten Haltepositionen in einer Batteriehalterung des Steuergeräts aufnehmbar und zwischen den Haltepositionen unter Verbleib in der Batteriehalterung verlagerbar zu sein, wobei die Batterie ferner dazu ausgebildet ist, in der jeweiligen Halteposition in der Batteriehalterung mittels der Rastmittel von Batterie und Steuergerät lösbar festlegbar zu sein, wobei die Batterie ferner eine vorzugsweise mechanisch kodierte Schlüsselvorrichtung umfasst und nur dann in wenigstens einer der Haltepositionen in der Batteriehalterung betriebsbereit aufnehmbar ist, wenn die Kodierung der Schlüsselvorrichtung mit einer Kodierung der Schlossvorrichtung korrespondiert.

Die Batterie kann beliebige der vorangehend in Bezug auf eine wiederaufladbare Batterie beschriebenen Merkmale aufweisen.

Vorzugsweise weist die Batterie ein Paar elektrischer Kontakte auf, welches an den Rastmitteln der Batterie ausgebildet ist. Dadurch werden Aufbau und Herstellung der Batterie vereinfacht und es wird sichergestellt, dass auch dann, wenn die Batterie mit Spiel in der Batteriehalterung des Steuergeräts aufgenommen ist, die Batterie zuverlässig elektrisch mit dem Steuergerät verbindbar ist.

Ein bevorzugtes Ausführungsbeispiel der Erfindung wird im Folgenden unter Bezugnahme auf die beiliegenden Figuren erläutert werden, in welchen
- Fig. 1: eine erfindungsgemäße wiederaufladbare Batterie in teils schematischer Darstellung zeigt,
- Fig. 2a: eine in ein schematisch dargestelltes erfindungsgemäßes Steuergerät in einer ersten Halteposition (Ladeposition) eingesetzte erfindungsgemäße wiederaufladbare Batterie,
- Fig. 2b: die in das Steuergerät aus Fig. 2a in einer zweiten Halteposition (Einschaltposition) eingesetzte Batterie, und
- Fig. 2c: die in das Steuergerät aus Fig. 2a in einer dritten Halteposition (Ausschaltposition) eingesetzte Batterie.

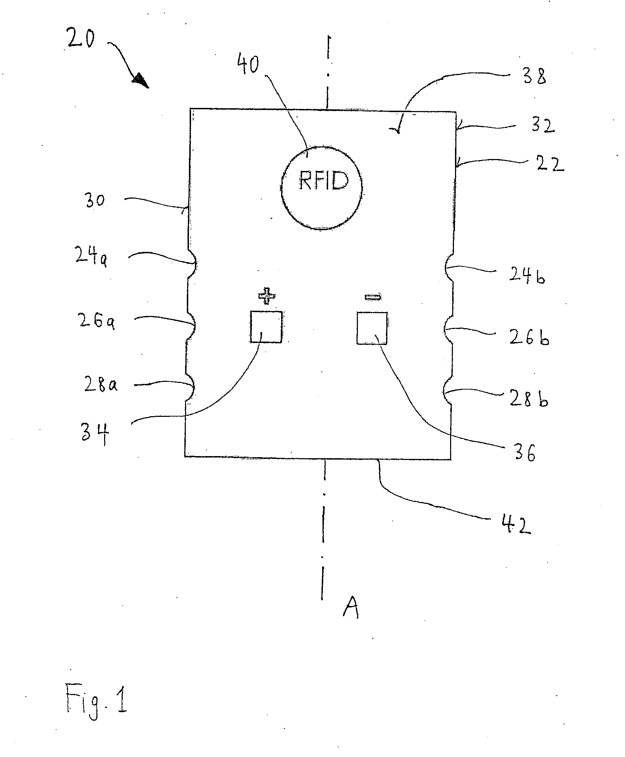

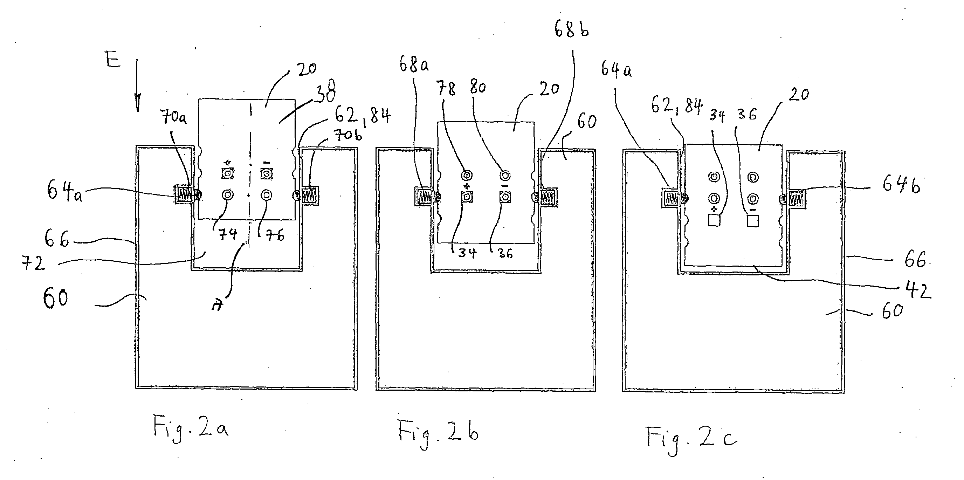

Figur 1 zeigt ein Ausführungsbeispiel einer wiederaufladbaren Batterie 20 (Akkumulator 20) gemäß der vorliegenden Erfindung. Der Akkumulator 20 weist in zur Längsachse A des Akkumulators 20 paralleler Richtung mit Abstand voneinander angeordnete Eingriffsausnehmungen 24a, 26a, 28a, beispielsweise in Form von Einkerbungen, auf. Jede der Eingriffsausnehmungen 24a, 26a, 28a ist genau einer von einer Mehrzahl verschiedener, im Folgenden zu erläuternder Haltepositionen des Akkumulators 20 in einer Batteriehalterung 62 eines Steuergeräts 60 zugeordnet. Vorzugsweise sind in zwei entgegengesetzten Seitenflächen 30, 32 des Akkumulators 20 derartige Eingriffsausnehmungen 24a, 26a, 28a, 24b, 26b, 28b vorgesehen, wodurch Paare von Eingriffsausnehmungen 24a, 24b und 26a, 26b und 28a, 28b definiert sind. In dem vorliegenden Ausführungsbeispiel ist jedes dieser Paare genau einer von drei in den Figuren 2a-c dargestellten Haltepositionen zugeordnet. Jede der Eingriffsausnehmungen 24a, 26a, 28a, 24b, 26b, 28b (zweite Rastmittel 24a, 26a, 28a, 24b, 26b, 28b) ist dazu bestimmt, mit an dem Steuergerät 60 vorgesehenen ersten Rastmitteln 64a, 64b in Eingriff zu treten.

Der Akkumulator 20 umfasst ferner ein Paar elektrischer Kontakte 34, 36, welche in dem in Figur 1 dargestellten Ausführungsbeispiel in einer keine der Eingriffsausnehmungen 24a, 26a, 28a, 24b, 26b, 28b aufweisenden Seitenfläche 38 des Akkumulators 20 vorgesehen sind. Die Kontakte 34, 36 sind relativ zu jeweiligen ihnen benachbarten Abschnitten der Seitenfläche 38 bereitgestellt. Der Akkumulator 20 weist vorzugsweise eine im Wesentlichen quaderförmige Gestalt auf und die die Kontakte 34, 36 aufweisende Seitenfläche 38 erstreckt sich vorzugsweise im Wesentlichen senkrecht zu den die Eingriffsausnehmungen 24a, 26a, 28a, 24b, 26b, 28b aufweisenden Seitenflächen 30, 32.

Der Akkumulator 20 weist weiterhin einen in Figur 1 schematisch dargestellten RFID-Chip 40 auf, welcher eine nicht dargestellte Speichereinheit umfasst, in der eine als binäre Zeichenkette bereitgestellte Kennung gespeichert ist. Die Kennung umfasst vorzugsweise einen den spezifischen Akkumulator 20 identifizierenden Teil, beispielsweise eine individualisierte Seriennummer. Die Kennung kann weiterhin einen Teil umfassen, welcher in Bezug auf das Steuergerät 60 oder/und andere Steuergeräte Rechte eines Benutzers des Akkumulators 20 definiert.

Die Figuren 2a-c zeigen jeweils ein erfindungsgemäßes Steuergerät 60, in welches der erfindungsgemäße Akkumulator 20 in jeweils einer definierten Halteposition eingesetzt ist. Das Steuergerät 60 ist vorzugsweise ein Funkfernsteuerungsgerät, beispielsweise zur Fernsteuerung eines Krans oder einer anderen Verlade- oder Transportvorrichtung. Das Steuergerät 60 umfasst ein Gehäuse 66 und eine an oder in dem Gehäuse 66 vorgesehene Batteriehalterung 62, welche vorzugsweise als Batteriefach 84 bereitgestellt ist und dazu vorgesehen ist, den Akkumulator 20 aufzunehmen.

Damit der Akkumulator 20 an der Batteriehalterung 62 ablösbar festlegbar ist, weist die Batteriehalterung 62 erste Rastmittel 64a, 64b auf, welche dazu angepasst sind, mit den an dem Akkumulator 20 bereitgestellten Eingriffsausnehmungen 24a, 26a, 28a, 24b, 26b, 28b in lösbaren Rasteingriff zu treten. Die ersten Rastmittel 64a, 64b sind vorzugsweise als federvorgespannte Rastkugeln bereitgestellt. In der in den Figuren dargestellten Ausführungsform weist das Steuergerät 60 zwei in der Batteriehalterung 62 bereitgestellte Rastkugeln 64a, 64b auf, wobei jede der Rastkugeln 64a, 64b zusammen mit jeweils einer Spannfeder 68a, 68b in einer in der Batteriehalterung 62 vorgesehenen Federausnehmung 70a, 70b derart angeordnet ist, dass jede der Rastkugeln 64a, 64b teilweise aus der jeweiligen Federausnehmung 70a, 70b heraus in einen zur Aufnahme des Akkumulators 20 vorgesehenen Leerraum 72 der Batteriehalterung 62 hineinragt. Der Leerraum 72 ist im Beispielsfall als offene Aussparung dargestellt. Selbstverständlich kann er auch umlaufend geschlossen sein, so dass er einen Schacht bildet.

Das Steuergerät 60 weist ferner wenigstens ein erstes Paar elektrischer Kontakte 74, 76 auf, welche dazu vorgesehen sind, mit dem an dem Akkumulator 20 vorgesehenen Paar elektrischer Kontakte 34, 36 elektrisch derart in Verbindung zu treten, dass das Steuergerät 60 von dem Akkumulator 20 mit elektrischer Spannung versorgt wird. Ferner kann das Steuergerät 60 ein zweites Paar elektrischer Kontakte 78, 80 umfassen, welche ebenfalls dazu vorgesehen sind, mit dem an dem Akkumulator 20 vorgesehenen Paar 34, 36 elektrischer Kontakte elektrisch in Verbindung zu treten, so dass eine an das Steuergerät 60 anschließbare externe Spannungsquelle (in den Figuren nicht dargestellt) den Akkumulator 20 über die elektrischen Kontakte 34, 36, 78, 80 aufladen kann.

Das Steuergerät 60 umfasst weiterhin eine in den Figuren nicht dargestellte Signalgebereinrichtung, welche dazu angepasst ist, einem in den Figuren ebenfalls nicht dargestellten zu steuernden Gerät Steuersignale bereitzustellen. Die Signalgebereinrichtung ist vorzugsweise ein einen Funksender umfassendes Funkfernsteuerungsgerät. Erfindungsgemäß ist die Signalgebereinrichtung durch eine Verlagerung des Akkumulators 20 in der Batteriehalterung 62 in eine im Folgenden zu erläuternde Ausschaltposition derart deaktivierbar, dass die Signalgebereinrichtung keine Signale mehr emittiert. Die Deaktivierung erfolgt dabei vorzugsweise durch eine Unterbrechung der dem Steuergerät 60 durch den Akkumulator 20 bereitgestellten Spannungsversorgung.

Die Figuren 2a-c zeigen den in unterschiedlichen Haltepositionen an dem Steuergerät 60 ablösbar angebrachten Akkumulator 20. Figur 2a zeigt eine Ladeposition, in welcher der Akkumulator 20 von einer an das Steuergerät 60 anschließbaren externen Spannungsquelle aufgeladen wird. Figur 2b zeigt eine Einschaltposition, in welcher das Steuergerät 60 in Betrieb ist und dabei von dem Akkumulator 20 mit Spannung versorgt wird. Figur 2c zeigt schließlich eine Ausschaltposition, in welcher das Steuergerät 60 nicht mit Spannung aus der Batterie 20 versorgt wird und die Signalgebereinrichtung daher keine Steuersignale emittiert.

In der Ladeposition (Figur 2a) ist der Akkumulator 20 über das Steuergerät 60 elektrisch mit einer an das Steuergerät 60 angeschlossenen Spannungsquelle verbunden. Das Steuergerät 60 und insbesondere die Signalgebereinrichtung sind dabei jedoch vorzugsweise nicht in Betrieb. In der Einschaltposition (Figur 2b) ist der Akkumulator 20 elektrisch mit dem Steuergerät 60 derart verbunden, dass er das Steuergerät 60 mit Spannung versorgt und die Signalgebereinrichtung Steuersignale zur Steuerung des zu steuernden Geräts abgeben kann. In der Ausschaltposition (Figur 2c) ist der Akkumulator 20 mit dem Steuergerät 60 elektrisch nicht verbunden, so dass die Signalgebereinrichtung keine Steuersignale abgeben kann. Gemäß der in den Figuren dargestellten Ausführungsform sind das an dem Akkumulator 20 vorgesehene Paar elektrischer Kontakte 34, 36 und das erste und das zweite Paar elektrischer Kontakte 74, 76 bzw. 78, 80 des Steuergeräts 60 in Bezug auf die ersten und zweiten Rastmittel 64a, 64b bzw. 24a, 26a, 28a, 24b, 26b, 28b so angeordnet, dass das an dem Akkumulator 20 vorgesehene Paar elektrischer Kontakte 34, 36 in der Einschaltposition an dem ersten Paar elektrischer Kontakte 74, 76 anliegt (Figur 2) und in der Ladeposition an dem zweiten Paar elektrischer Kontakte 78, 80 anliegt (Figur 1).

Eine Einführrichtung E, in welcher der Akkumulator 20 in die Batteriehalterung 62 eingeführt wird, verläuft parallel zu einer Längsachse A des Akkumulators 20.

Jedem Paar von Eingriffsausnehmungen 24a, 24b 26a, 26b, 28a, 28b ist genau eine Halteposition zugeordnet. In der in den Figuren 2a-c dargestellten Ausführungsform ist dem in Einführrichtung E am nächsten an einem vorderen Endabschnitt 42 des Akkumulators 20 ausgebildeten Paar von Eingriffsausnehmungen 28a, 28b die Ladeposition zugeordnet, d.h. wenn die Rastmittel 64a, 64b in die Eingriffsausnehmungen 28a, 28b eingreifen, ist der Akkumulator 20 in der Batteriehalterung 62 in der Ladeposition aufgenommen. Analog ist dem in Einführrichtung E am weitesten entfernt von dem vorderen Endabschnitt 42 des Akkumulators 20 vorgesehenen Paar von Eingriffsausnehmungen 24a, 24b die Ausschaltposition zugeordnet, während dem in Einführrichtung E zwischen den beiden vorgenannten Paaren angeordneten Paar von Eingriffsausnehmungen 26a, 26b die Einschaltposition zugeordnet ist.

Alternativ kann der Akkumulator 20 in einer in den Figuren nicht dargestellten Ausführungsform in jeder der Eingriffsausnehmungen 24a, 24b 26a, 26b, 28a, 28b je einen elektrischen Kontakt aufweisen. Wenn auch die ersten Rastmittel 64a, 64b des Steuergeräts 60 mit elektrischen Kontakten ausgestattet sind, wird gemäß dieser Ausführungsform ein elektrischer Kontakt bzw. die Aufhebung eines bestehenden elektrischen Kontakts zwischen Akkumulator 20 und Steuergerät 60 durch das Einrasten der Rastmittel 64a, 64b in ein Paar von Eingriffsausnehmungen 24a, 24b 26a, 26b, 28a, 28b herbeigeführt.

Beim Einführen des Akkumulators 20 in die Batteriehalterung 62 werden die Rastkugeln 64a, 64b von einem in Einführrichtung E vorderen Endabschnitt 42 des Akkumulators 20 zunächst radial nach außen in die ihnen zugeordneten Federausnehmungen 70a bzw. 70b hineingedrückt. Wenn sich das in Einführrichtung E am nächsten an dem Endabschnitt 42 gelegene Paar von Eingriffsausnehmungen 28a, 28b in Einführrichtung E auf Höhe der Federausnehmungen 70a, 70b befindet, entspannen sich die Rückstellfedern 68a, 68b, wobei die Rastkugeln 64a, 64b in die Eingriffsausnehmungen 28a, 28b eingreifen und dadurch den Akkumulator 20 in der Ladeposition lösbar verrasten (Figur 2a). Durch Druckbeaufschlagung des Akkumulators 20 in Einführrichtung E kann die Verrastung gelöst und der Akkumulator in der Batteriehalterung 62 in Einführrichtung E vorwärtsbewegt werden, bis die Rückstellfedern 68a, 68b in das in Einführrichtung E benachbarte Paar von Eingriffsausnehmungen 26a, 26b eingreifen und dadurch den Akkumulator 20 in der Einschaltposition verrasten (Figur 2b).

Vorzugsweise ist das Batteriefach 84 so beschaffen, dass der darin in der Einschaltposition aufgenommene Akkumulator 20 teilweise aus dem Gehäuse 66 herausragt. Eine weitere Druckbeaufschlagung des Akkumulators 20 in Einführrichtung E bewirkt ein weiteres Einschieben des Akkumulators 20 in das Batteriefach 84, wobei die vorgenannte Verrastung gelöst und der Akkumulator 20 vorwärtsbewegt werden, bis die Rückstellfedern 68a, 68b in das in Einführrichtung E am weitesten entfernt von dem Endabschnitt 42 gelegene Paar von Eingriffsausnehmungen 24a, 24b des Akkumulators 20 eingreifen und diesen dadurch in der Ausschaltposition (Not-aus-Position) verrasten (Figur 2c).

In Weiterbildung der Erfindung kann vorgesehen sein, dass in Abhängigkeit von der gewünschten einzustellenden Halteposition unterschiedlich starke Druckbeaufschlagungen des Akkumulators 20 erforderlich sind. Um eine versehentliche Verlagerung des Akkumulators 20 in die Ausschaltposition zu vermeiden, kann insbesondere vorgesehen sein, dass zum Überführen des Akkumulators 20 aus der Einschaltposition in die Ausschaltposition eine größere Druckbeaufschlagung nötig ist als für die Überführung aus der Ladeposition in die Einschaltposition.

Nachzutragen ist, dass an dem Steuergerät 60 vorzugsweise ein in den Figuren nicht dargestelltes Lesegerät vorgesehen ist, mit dessen Hilfe die auf dem RFID-Chip 40 gespeicherte Kennung auslesbar ist. Entsprechende RFID-Chips und Lesegeräte sind aus dem Stand der Technik bekannt, so dass auf ihre weitere Beschreibung verzichtet werden kann. Ferner ist nachzutragen, dass aus Gründen der Übersichtlichkeit in den Figuren 2a-2c auf eine Darstellung des RFID-Chip 40 des Akkumulators 20 verzichtet wurde.

## Patentansprüche

1. Steuergerät (60), insbesondere Funkfernsteuerungsgerät, mit einem Gehäuse (66), einer Signalgebereinrichtung zur Bereitstellung von Steuersignalen für ein zu steuerndes Gerät und mit einer Batteriehalterung (62) zur Aufnahme einer wiederaufladbaren Batterie (20) zur elektrischen Versorgung des Steuergerätes (60),
**dadurch gekennzeichnet, dass** die Batteriehalterung (62) so beschaffen ist, dass sie die wiederaufladbare Batterie (20) in verschiedenen definierten Haltepositionen aufnehmen kann, zwischen denen die wiederaufladbare Batterie (20) unter Verbleib in der Batteriehalterung (62) verlagerbar ist, wobei eine der Haltepositionen eine Einschaltposition zur elektrischen Versorgung des Steuergerätes (60) mittels der Batterie (20) ist und eine weitere der Haltepositionen eine Ausschaltposition ist, wobei die Signalgebereinrichtung durch Verlagerung der Batterie (20) in die Ausschaltposition deaktivierbar ist.

2. Steuergerät (60) nach Anspruch 1,
**dadurch gekennzeichnet, dass** das Steuergerät (60) und die Batterie (20) elektrisch voneinander getrennt sind, wenn die Batterie (20) in der Ausschaltposition ist.

3. Steuergerät (60) nach Anspruch 1 oder 2,
**dadurch gekennzeichnet, dass** die Batterie (20) in einer der Haltepositionen aufladbar ist.

4. Steuergerät (60) nach einem der vorhergehenden Ansprüche,
**dadurch gekennzeichnet, dass** die Batteriehalterung (62) so beschaffen ist, dass eine darin aufgenommene Batterie (20) durch Druckbeaufschlagung in die Ausschaltposition verlagerbar ist.

5. Steuergerät (60) nach einem der vorhergehenden Ansprüche,
**dadurch gekennzeichnet, dass** die Batteriehalterung (62) ein Batteriefach (84) aufweist, das so beschaffen ist, dass eine darin in der Einschaltposition aufgenommene Batterie (20) teilweise aus dem Gehäuse (66) herausragt und durch weiteres Einschieben in das Batteriefach (84) aus der Einschaltposition in die Ausschaltposition verlagerbar ist.

6. Steuergerät (60) nach einem der vorhergehenden Ansprüche,
**dadurch gekennzeichnet, dass** die Batteriehalterung (62) erste Rastmittel (64a, 64b) zur lösbaren Festlegung der Batterie (20) in der jeweiligen Halteposition aufweist.

7. Steuergerät (60) nach einem der vorhergehenden Ansprüche,
**dadurch gekennzeichnet, dass** es eine zur Aufnahme in der Batteriehalterung (62) angepasste wiederaufladbare Batterie (20) umfasst.

8. Steuergerät (60) nach Anspruch 6 und 7,
**dadurch gekennzeichnet, dass** die Batterie (20) zu den ersten Rastmitteln (64a, 64b) des Steuergerätes (60) komplementäre zweite Rastmittel (24a, 26a, 28a, 24b, 26b, 28b) aufweist.

9. Steuergerät (60) nach einem der vorhergehenden Ansprüche,
**dadurch gekennzeichnet, dass** das Steuergerät (60) wenigstens ein erstes Paar elektrischer Kontakte (74, 76) aufweist, welches an den ersten Rastmitteln (64a, 64b) der Batteriehalterung (62) bereitgestellt ist und dazu ausgebildet ist, in wenigstens einer der Haltepositionen an einem weiteren, an der Batterie (20) vorgesehenen Paar elektrischer Kontakte (34, 36) anzuliegen.

10. Steuergerät (60) nach einem der vorhergehenden Ansprüche,
**dadurch gekennzeichnet, dass** die Batterie (20) eine vorzugsweise mechanisch kodierte Schlüsselvorrichtung (40) umfasst und das Steuergerät (60) eine in derselben Weise, vorzugsweise mechanisch, kodierte Schlossvorrichtung umfasst, wobei die Batterie (20) nur dann in wenigstens einer der Haltepositionen in der Batteriehalterung (62) aufnehmbar ist, wenn die Kodierung der Schlüsselvorrichtung (40) mit der Kodierung der Schlossvorrichtung korrespondiert.

11. Steuergerät (60) nach einem der vorhergehenden Ansprüche,
**dadurch gekennzeichnet, dass** die Schlüsselvorrichtung (40) einen mit einer elektromagnetisch auslesbaren Kennung bereitgestellten Transponder, vorzugsweise einen RFID-Chip (40), umfasst und die Schlossvorrichtung eine Vorrichtung zum elektromagnetischen Auslesen der Kennung umfasst.

12. Steuergerät (60) nach einem der vorhergehenden Ansprüche,
**dadurch gekennzeichnet, dass** es tragbar ist und die Signalgebereinrichtung einen Funksender umfasst.

13. Wiederaufladbare Batterie (20) für ein Steuergerät (60), die dazu angepasst ist, das Steuergerät (60) elektrisch zu versorgen, wobei die Batterie (20) zu Rastmitteln (64a, 64b) des Steuergeräts (60) komplementäre Rastmittel (24a, 26a, 28a, 24b, 26b, 28b) aufweist,
**dadurch gekennzeichnet, dass** die Batterie (20) dazu angepasst ist, in verschiedenen definierten Haltepositionen in einer Batteriehalterung (62) des Steuergeräts (60) aufnehmbar und zwischen den Haltepositionen unter Verbleib in der Batteriehalterung (62) verlagerbar zu sein, wobei die Batterie (20) ferner dazu ausgebildet ist, in der jeweiligen Halteposition in der Batteriehalterung (62) mittels der Rastmittel (24a, 26a, 28a, 24b, 26b, 28b, 64a, 64b) von Batterie (20) und Steuergerät (60) lösbar festlegbar zu sein, wobei die Batterie (20) ferner eine vorzugsweise mechanisch kodierte Schlüsselvorrichtung (40) umfasst und nur dann in wenigstens einer der Haltepositionen in der Batteriehalterung (62) aufnehmbar ist, wenn die Kodierung der Schlüsselvorrichtung (40) mit einer Kodierung der Schlossvorrichtung korrespondiert.

14. Wiederaufladbare Batterie (20) nach Anspruch 13,
**dadurch gekennzeichnet, dass** die Batterie (20) ein Paar elektrischer Kontakte (34, 36) aufweist, welches an den Rastmitteln (24a, 26a, 28a, 24b, 26b, 28b, 64a, 64b) der Batterie (20) ausgebildet ist.
